# EUROPÄISCHE PATENTSCHRIFT

(11) **EP 1 832 784 B1**
(45) Veröffentlichungstag und Bekanntmachung des Hinweises auf die Patenterteilung: **16.04.2014**
(21) Anmeldenummer: 07003082.0
(22) Anmeldetag: 14.02.2007
(51) Int. Cl.: F16H 61/12

(54) **Verfahren zur Ermittlung des Funtionszustandes eines aktorenbetätigten Getriebes**
Method for determining the functional status of an actuator activated transmission
Procédé de détermination de l'état de fonctionnement d'une boîte de vitesses pilotée

(30) Priorität: 11.03.2006 DE 102006011407
(43) Veröffentlichungstag der Anmeldung: 12.09.2007
(73) Patentinhaber: Schaeffler Technologies GmbH & Co. KG, 91074 Herzogenaurach (DE)
(72) Erfinder: Schmitt, Werner, 76547 Sinzheim (DE); Winkler, Oliver, 77866 Rheinau (DE)

(56) Entgegenhaltungen:
- EP-A2- 1 632 695
- DE-A1- 10 104 099
- DE-A1-102004 022 827

## Beschreibung

Die Erfindung betrifft ein Verfahren mit den Merkmalen gemäß dem Oberbegriff von Anspruch 1.

In Fahrzeugen mit automatisch betriebenen Schaltgetrieben werden die Gänge durch mindestens einen Getriebeaktor ein- und ausgelegt. Dabei erfolgt die Ansteuerung des Getriebeaktors durch ein Getriebesteuergerät, welches unter anderem auch die Gangauswahl trifft.

In der gattungsbildenden DE 10. 2004 022 827 A1 wird ein Verfahren und eine Vorrichtung zur Bewertung von Schaltvorgängen eines Getriebes mit elektrisch betätigtem Stellglied beschrieben, wobei die Schaltqualität auf Basis eines zur Schaltkraft des elektrischen Stellers äquivalenten Signals, z. B. des vom Motor aufgenommenen Stromes und/oder der Leistung und/oder der Schaltarbeiter, ermittelt wird. Das Signal wird dabei zu mindestens einem Zeitpunkt während des Schaltvorgangs aufgenommen und hinsichtlich seiner Größe mit einem oder mehreren Referenzwerten verglichen.

Durch Verschleiß, aber auch aufgrund extremer Belastung kann das Getriebe, bzw. einzelne Gänge des Getriebes beschädigt werden und vorzeitig ausfallen. Im Falle eines solchen Getriebefehlers wird vom Getriebesteuergerät ein globaler Fehlereintrag (wie zum Beispiel ein Getriebeaktor-Übertemperatur-Fehlersignal) erzeugt. Aus dieser Information lässt sich zwar schließen, dass etwas im Getriebesystem fehlerhaft ist, jedoch die genauere Ursache des Fehlers ist daraus nicht zu erkennen.

Auch ist eine solche Fehlererkennung erst dann möglich, wenn das Getriebe schon fehlerhaft ist und evtl. nicht mehr verwendet werden kann. Dies führt dazu, dass das entsprechende Fahrzeug evtl. nicht mehr eigenständig bewegt werden kann und deshalb abgeschleppt werden muss. Daraus entstehen dem Halter des Fahrzeugs in der Regel hohe Kosten und ein hoher zeitlicher Aufwand.

Aufgabe der vorliegenden Erfindung ist es zumindest einen der Nachteile des Standes der Technik zumindest teilweise zu lindern.

Gelöst wird die Aufgabe durch ein Verfahren mit den Merkmalen gemäß Anspruch 1.

Im Falle eines Getriebeproblems wird sich der Fehler am Getriebe bereits lange Zeit vor dem Auftreten des Getriebefehlers bzw. dem Ausfall des Getriebes durch eine entsprechende Schwergängigkeit bemerkbar machen. Diese Eigenschaft kann verwendet werden um ein mechanisches Problem im Getriebe vorzeitig zu erkennen.

Soll nun die Schwergängigkeit eines Ganges bewertet werden, so kann entweder der Vorgang des Einlegens eines Gangs oder der Vorgang des Verlassen (Auslegen) eines Gangs betrachtet und ausgewertet werden.

Wird der Vorgang des Einlegens betrachtet und insbesondere die dafür benötigte Zeit, so ist diese bei Betrieb des Fahrzeugs davon abhängig, wie lange die Synchronisierung zwischen dem Getriebeeingang und dem Getriebeausgang dauert. Die Zeitdauer der Synchronisierung hängt entscheidend von der Drehzahldifferenz zwischen dem Getriebeeingang und dem Getriebeausgang ab und damit davon, von welchem Gang ausgegangen wird. Dadurch sind die Kennwerte, die die Schwergängigkeit beim Einlegen eine Gangs beschreiben könnten, wie Zeit, Energieaufnahme, Spannungsabfall, Stromaufnahme, innerer Widerstand etc, großer Streuung unterworfen. Somit kann der Vorgang des Einlegens eines Gangs für die Funktionalitätsprüfung nur schwerlich herangezogen werden.

Die Synchronisierung wird jedoch nicht beim Auslegen des Gangs vorgenommen, so dass der Vorgang des Auslegen eines Gangs unabhängig ist vom gewählten Zielgang. Damit sind die die Schwergängigkeit beschreibenden Parameter weniger gestreut als beim Gangeinlegen und somit geeignet um eine Aussage über die Funktionalität des Getriebes zu treffen.

Besonders bevorzugt wird die Energie, die benötigt wird einen Gang zu verlassen, mit der Energie verglichen, die nötig ist andere Gänge zu verlassen. Die Energie ist dabei insbesondere die Energie, die der Aktor benötigt, den Gang auszulegen. Dabei kann bei elektrischen Aktoren die Energie, die der Aktor aufwendet um den Gang auszulegen gleich oder proportional zur der vom Aktor aufgenommenen elektrischen Energie angesehen werden. Aus diesem Grund muss hier nur die elektrische Energie gemessen werden um die Schwergängigkeit des Getriebes zu messen. Die elektrische Energie lässt sich mit Standardbauteilen leicht und kostengünstig messen und als ein elektrisches Signal der weiteren Verarbeitung zuführen.

Anstelle der Energie, die der Aktor benötigt, kann auch der benötigte Strom, der Spannungsabfall, der Getriebeaktor- Innenwiderstand und/oder die Zeit zum Auslegen des Gangs etc. gemessen werden, um die Schwergängigkeit bzw. die Funktionalität des Gangs zu messen.

Bevorzugt werden mittels eines statistischen Verfahrens die Vorgänge miteinander verglichen. Durch das statistische Verfahren wird gewährleistet, dass ein Gang, der besonders schwergängig ist, möglichst frühzeitig als defekt erkannt wird, ohne dass unnötig häufig ein Gang fälschlicherweise als defekt gemeldet wird. Durch das statistische Verfahren kann sowohl die mittlere Schwergängigkeit eines Gangs, als auch die mittlere Schwergängigkeit über alle Gänge ermittelt werden. Durch den statistischen Vergleich sowohl von Messpunkten eines Ganges, als auch der Messpunkte verschiedener Gänge kann eine robuste und frühzeitige Einschätzung erfolgen, ob ein Gang defekt ist. Die Statistik kann dabei in dem Getriebsteuergerät hinterlegt werden und die Energiebereiche bzw. die Bereiche, in denen die Werte der Schwergängigkeit beim Auslegen der einzelnen Gänge auftreten und deren Häufigkeit beinhalten.

Erfindungsgemäß wird zwischen der Funktionalität der Aktorik und der Funktionalität der Gänge unterschieden. So wird im Fall eines Defekts der Aktorik alle Gänge gleichmäßig schwer auszulegen sein. Es wird also kein signifikanter Unterschied zwischen der Schwergängigkeit der einzelnen Gänge ersichtlich sein. Ist jedoch ein einzelner Gang bzw. eine einzelne Schaltschiene defekt, so wird sich dieser Gang schwerer auslegen lassen, als die übrigen Gänge. Aus dieser Korrelation der Schwergängigkeit beim Auslegen der Gänge lässt sich entscheiden, ob die Aktorik selbst bis zur Schaltschiene defekt ist oder die Schaltschiene selbst. Dieses Ergebnis kann wiederum in einem Speicher gespeichert werden und so bei einer Reparatur oder einer Kundenbeanstandung dem Monteur bereitgestellt werden. Auch kann die ganze Statistik der entsprechenden Fachkraft zur Verfügung gestellt werden, so dass diese aufgrund der Statistik entscheiden kann, ob ein Gang und/oder die Aktorik defekt ist und falls dies der Fall sein sollte, in welchem Maße der Defekt vorliegt und welcher Gang betroffen ist.

In einer besonders bevorzugten Ausführung wird einem Getriebesteuermittel das Ergebnis der Funktionszustandsermittelung bereitgestellt. Da das Getriebesteuermittel in der Regel ein Speichermittel umfasst, kann hier das Ergebnis der Funktionszustanderkennung als statistischer Vergleich der Schwergängigkeit beim Auslegen der verschiedenen Gänge hinterlegt werden. Hier können evtl. auch entsprechende Grenzwerte hinterlegt werden, deren Überschreitung den Gang und/oder die Aktorik als defekt definieren. Diese Hinterlegungen können bevorzugt von im Rahmen einer Inspektion, Reparatur etc. ausgelesen werden. Dadurch kann eine Werkstatt bei der Fehlerbeseitigung unterstützt werden und es wird der Austausch vermeintlich defekter Teile vermieden. Außerdem vermindert sich durch die verbesserte Diagnose die Reparaturzeit. Auch vermindert dies die Anzahl der Austauschteile, bei denen kein Defekt festgestellt werden konnte ("NoTroubleFound-Rückläufer-Teile).

In einer weiteren Ausführungsform trifft das Getriebesteuermittel in Ansprechen auf das Ergebnis der Funktionszustandsermittlung die Auswahl der Gänge. Dadurch wird es möglich, dass das Getriebesteuermittel bestimmte, als schwergängig erkannte Gänge nicht im Schaltablauf ansteuert , wodurch zwar die Funktionalität des Getriebes eingeschränkt wird, aber eine Verfügbarkeit des Getriebes weiterhin sichergestellt wird. Dabei würde zum Beispiel vermieden, dass ein globales Fehlersignal generiert wird, wie eine Getriebeaktorübertemperatur-Fehlermeldung und die entsprechenden globale Ersatzmaßnahmen, wie ein Verhindern weiterer Gangwechsel, durchgeführt werden, sondern das Getriebe bleibt, wenn auch nur eingeschränkt, funktionsfähig.

### Die Erfindung wird wie folgt verwendet:

Während des Gangwechsels bei einem Fahrzeug misst ein Sensormittel die Energieaufnahme des Getriebeaktors, indem die vom Getriebeaktor aufgenommene elektrische Energie gemessen wird. Diese Energieaufnahme wird insbesondere über die Zeit gemessen. Dieser Energiewert wird durch das Sensormittel der Getriebesteuerung als elektrisches Signal zur Verfügung gestellt. Die Getriebesteuerung erkennt nun, ob der einzelne Wert sich in einem bestimmten Bereich um einen Richtwert befindet. Der Richtwert kann dabei der Mittelwert oder der Median verschiedener vorher ermittelter Werte sein. Der Bereich kann dabei von dem Standardfehler, der Quartile etc bestimmt werden. Weiter prüft die Getriebesteuerung, ob insgesamt die Energieaufnahme zum Auslegen der Gänge besonders hoch ist, z.B. einen vorher festgelegten Grenzwert überschreitet. Ist dies der Fall, so gibt die Getriebesteuerung ein entsprechendes Fehlersignal aus, das zum Beispiel den Fahrer über einen Getriebeschaden informiert und ihn veranlasst die nächste Werkstatt aufzusuchen. Weist nur ein Gang bei Auslegen einen erhöhten Energiebedarf auf, so erzeugt die Getriebesteuerung ein entsprechendes Signal und steuert den als schwergängig erkannten Gang im Weiteren nicht mehr an.

Wird eine Werkstatt aufgesucht, kann nun aus der entsprechenden gespeicherten Statistik der Getriebedefekt erkannt werden und entsprechende Reparaturmaßnahmen durchgeführt werden.

## Patentansprüche

1. Verfahren zur Ermittlung des Funktionszustandes eines aktorbetätigten Getriebes, wobei der Vorgang einen Gang zu verlassen, mit dem Vorgang andere Gänge zu verlassen verglichen wird, **dadurch gekennzeichnet, dass** zwischen der Funktionalität der Aktorik und der Funktionalität der Gänge unterschieden wird, wobei im Fall eines Defekts der Aktorik alle verglichenen Gänge gleichmäßig schwer auszulegen sein werden, ist jedoch ein einzelner Gang oder eine einzelne Schaltschiene defekt, so wird sich dieser Gang schwerer auslegen lassen, als die übrigen verglichenen Gänge.

2. Verfahren zur Ermittlung des Funktionszustandes nach dem vorhergehenden Anspruch, **dadurch gekennzeichnet, dass** die Energie, die benötigt wird einen Gang zu verlassen, mit der Energie verglichen wird, die nötig ist andere Gänge zu verlassen.

3. Verfahren zur Ermittlung des Funktionszustandes nach einem der vorhergehenden Ansprüche, **dadurch gekennzeichnet, dass** mittels eines statistischen Verfahrens die Vorgänge miteinander verglichen werden.

4. Verfahren zur Ermittlung des Funktionszustandes nach einem der vorhergehenden Ansprüche, **dadurch gekennzeichnet, dass** einem Getriebesteuermittel das Ergebnis der Funktionszustandsermittelung bereitgestellt wird.

5. Verfahren zur Ermittlung des Funktionszustandes nach einem der vorhergehenden Ansprüche, **dadurch gekennzeichnet, dass** das Getriebesteuermittel in Ansprechen auf das Ergebnis der Funktionszustandsermittlung die Auswahl der Gänge trifft.

## Claims

1. Method for determining the functional state of an actuator-operated gear mechanism, wherein the process of leaving a gear is compared with the process of leaving other gears, **characterized in that** a distinction is drawn between the functionality of the actuator system and the functionality of the gears, wherein all of the compared gears are equally difficult to disengage in the event of a defect in the actuator system, but if an individual gear or an individual shift rail is defective, this gear is more difficult to disengage than the other compared gears.

2. Method for determining the functional state according to the preceding claim, **characterized in that** the energy which is required to leave a gear is compared with the energy which is required to leave other gears.

3. Method for determining the functional state according to either of the preceding claims, **characterized in that** the processes are compared with one another by means of a statistical method.

4. Method for determining the functional state according to one of the preceding claims, **characterized in that** the result of the operation for determining the functional state is provided to a gear mechanism control means.

5. Method for determining the functional state according to one of the preceding claims, **characterized in that** the gear mechanism control means selects the gears in response to the result of the operation for determining the functional state.

## Revendications

1. Procédé de détermination de l'état de fonctionnement d'une boîte de vitesses actionnée par un actionneur, l'opération de quitter un rapport étant comparée avec l'opération de quitter d'autres rapports, **caractérisé en ce que** la différence est faite entre la fonctionnalité du mécanisme d'actionnement et la fonctionnalité des rapports, tous les rapports comparés devenant aussi difficiles à sortir dans le cas d'un défaut du mécanisme d'actionnement, toutefois, si un seul rapport ou une seule tige de commande de changement de rapport est défectueux(se), ce rapport sera alors plus difficile à sortir que les autres rapports comparés.

2. Procédé de détermination de l'état de fonctionnement selon la revendication précédente, **caractérisé en ce que** l'énergie qui est nécessaire pour quitter un rapport est comparée avec l'énergie qui est nécessaire pour quitter d'autres rapports.

3. Procédé de détermination de l'état de fonctionnement selon l'une des revendications précédentes, **caractérisé en ce que** les opérations sont comparées entre elles au moyen d'un procédé statistique.

4. Procédé de détermination de l'état de fonctionnement selon l'une des revendications précédentes, **caractérisé en ce que** le résultat de la détermination de l'état de fonctionnement est fourni à un moyen de commande de boîte de vitesses.

5. Procédé de détermination de l'état de fonctionnement selon l'une des revendications précédentes, **caractérisé en ce que** le moyen de commande de boîte de vitesses sélectionne les rapports en réaction au résultat de la détermination de l'état de fonctionnement.
